# EUROPEAN PATENT APPLICATION

(11) **EP 4 732 925 A1**
(43) Date of publication of application: **29.04.2026**
(21) Application number: 24208037.2
(22) Date of filing: 22.10.2024
(51) Int. Cl.: B01D 3/00, B01D 3/16, B01D 5/00, C01B 21/46

(54) **PROCESS AND APPARATUS FOR THE PURIFICATION OF NITRIC ACID**

(71) Applicant: Kellogg Brown & Root GmbH, 61348 Bad Homburg vor der Höhe (DE)
(72) Inventor: Seibert, Kevin, 61348 Bad Homburg vor der Höhe (DE); Bialek, Sebastian, 61348 Bad Homburg vor der Höhe (DE)
(74) Representative: Weickmann & Weickmann PartmbB

(57) **Abstract**

A process and system for purification of nitric acid containing fluorine-containing contaminants by depleting the fluorine-containing contaminants from nitric acid in gas phase using a liquid nitric acid stream containing cations of one or more metals.

## Description

### FIELD OF THE INVENTION

The present invention relates to the field of chemical synthesis, in particular regarding processes involving spent acids. Specifically, the invention relates to a process for purification of nitric acid from fluorine-containing contaminants. The invention further relates to an apparatus for purification of nitric acid from fluorine-containing contaminants, and to the use of liquid nitric acid containing cations of at least one metal for depleting fluorine-containing contaminants from nitric acid in gas phase.

### BACKGROUND

Recycling of mixed spent acids from production and extraction processes is an important approach to reduce raw material consumption and operating cost. Nitric acid (HNOs) is one of the strong inorganic acids that is commonly used in various applications. For instance, the so-called spent acid from such processes may be nitric acid that is contaminated with fluorine-containing compounds, e.g., whenever hydrofluoric acid is used in the process or when fluorine-containing raw materials are treated with nitric acid.

A special challenge can be that nitric acid is typically handled using equipment either of stainless steels, glass-lined steel or special materials like tantalum, niobium, silicon cast iron, high-silicon stainless steels. These materials are prone to fluoride attack even at concentrations as low as 10 ppm fluorides (Horn et al., Werkstoffe und Korrosion, pp. 191-200, 1992; DECHEMA e.V., "DECHEMA-Werkstoff-Tabelle. 37," 2012). Therefore, a separation process to purify a nitric acid from, e.g., fluorides contamination is required. Ideally, such a process should be able to achieve very low concentrations of residual fluorine-containing contaminants, e.g. fluorides, for instance concentrations lower than 10 ppm fluorine.

Some acids like sulfuric acid, which are considered to be non-volatile, can be separated from the volatile hydrofluoric acid by distillation. However, nitric acid is a volatile acid. For both hydrofluoric and nitric acid, the volatility may depend on the acid concentration and generally increases with increasing total acid concentration. As the total volatility difference between nitric and hydrofluoric acid is small, separation by simple distillation is difficult. As already mentioned, a separation process for purifying nitric acid from fluorine contamination should be able to reduce the fluorine-containing contaminants, ideally to below 10 ppm fluorine, while being economically and technically viable.

Different processes for the workup of nitric acid have been described. For instance, the solvent extraction processes extract both nitric and hydrofluoric acid. Therefore, they do not provide a solution for the separation of the two acids.

Shin et al. (Journal of Hazardous Materials, p. 729-734, 2009; Journal of Hazardous Materials, p. 1278-1284, 2009) describe a method to separate a mixed waste acid from a semi-conductor etching process containing silicates, hydrofluoric, nitric and acetic acid. The process includes a precipitation to separate the silicates and fluorides and solvent extraction step to separate the remaining nitric and acetic acid. It is reported that the solubility of sodium hexa-fluorosilicate in nitric acid with approx. 5 mol/L (equals approx. 27 wt% HNOs) is 0.055 mol/L (equals approx. 1.05 g/L fluorides). This fluoride concentration is significantly higher than the acceptable concentration of fluorides in nitric acids used in various applications.

JP 6 728 731 B2 describes a method for separating and recovering hydrofluoric acid and nitric acid from a mixed acid also containing hydrosilicofluoric acid. The hydrosilicofluoric acid is immobilized by adding a nitrate salt to form a metal hexafluorosilicate precipitate. However, the method requires a significant number of rectification columns to sufficiently separate the two acids. Furthermore, this method introduces a third agent (sulfuric acid) into the process, which can contaminate the products and increases the boiling temperatures of the system. In addition, operating rectification columns with highly concentrated acids requires highly-corrosion resistant materials, of which many are not resistant against nitric acid and hydrofluoric acid and high temperatures above 150 °C.

US patent 4,469,629 discloses a method to extract fluoride ions from a nuclear fuel solution containing nitrates, fluorides, silicates and various metals. The method includes treating the solution with a solid phase from hydrated silica to bind the fluorine to the silicon and then separating the solid phase from the solution. The main element of US 4,469,629 is a reactor, where the mixture of nitric acid, hydrofluoric acid, silicates and dissolved metals is contacted with hydrated silica, which is formed by silica gel and/or silicic acid, and which is preferably finely powdered. The fluorine forms a complex with the silica, H₂SiF₆ or SiF₆, depending on the relative amount of fluorine and silica being present. Gaseous H₂SiF₆ or SiF₆ is discharged to an alkaline scrubber and thus separated. Any fluorine, which adsorbs on the silica remains fixed to the solid phase and separated downstream by any means of solid-liquid separation. It is possible to deplete the fluoride content of a mixture of 10 mol/L HNOs and 0.1 mol/L HF (equals approx. 48 wt% HNOs and 1600 ppm fluorides) to less than 0.01 mol/L HF (equals approx. 160 ppm fluorides), which is still too high for many applications.

US patent 5,603,811 describes a method for treating an aqueous solution mainly containing nitric acid and hydrofluoric acid. The process includes a distillation to provide an aqueous solution of concentrated in nitric acid and hydrofluoric acid, and a second distillation to separate these. It is mentioned that the described method is particularly interesting when carried out with an aqueous solution, whose composition is close to that of a mixture of the two nitric acid-water and hydrofluoric acid-azeotropes. However, this means that it is not suitable for mixed acids with low concentrations of hydrofluoric acid and nitric acid concentrations significantly deviating therefrom. Furthermore, this process for the separation of hydrofluoric and nitric acid requires a distillation under reflux and therefore consumes a high amount of energy for evaporation and condensation.

The previously described and disclosed processes present several possibilities to separate nitric acid and hydrofluoric acid. However, none of these processes provide a solution that achieves low concentrations of fluorine-containing contaminants in the purified nitric acid, particularly below 25 ppm, more particularly below 10 ppm fluorine, and allows a continuous operation without stops e.g. for cleaning of distillation vessels, and minimizes the need for multiple evaporation and process steps.

### BRIEF SUMMARY OF THE INVENTION

The above-described disadvantages are overcome by the present invention. Accordingly, it is an object of the present invention to provide an improved process and apparatus for the separation of nitric acid and fluorine-containing contaminants.

This objective is solved by the invention as defined by the appended claims.

In examples, provided is a process for purification of nitric acid from fluorine-containing contaminants, including: contacting a column vapor feed stream (stream in gas phase), including fluorine-containing contaminants, with a column liquid feed stream (stream in liquid phase), including cations of one or more metals, in a distillation column, thereby depleting the fluorine-containing contaminants from the gas phase; and recovering nitric acid depleted in fluorine-containing contaminants as a column vapor discharge stream.

The described distillation process may utilize the effect of dissolved metals on the volatility of fluorides and nitric acid. As the volatility of fluorides decreases, the volatility of nitric acid increases. This principle may be used in a distillation system with multiple separation stages to yield a purified nitric acid. In particular, a purified nitric acid with fluorine-containing contaminants corresponding to < 10 ppm fluorides and a nitric acid recovery of > 90% can be obtained. For example, if the fluorine-containing contaminants are, e.g., hydrofluoric acid (HF), purified nitric acid with < 10 ppm fluorides can be obtained. Since fluorides contain only one fluorine (F) atom, <10 ppm fluorides equals <10 ppm fluorine.

In examples, disclosed is an apparatus for purification of nitric acid from fluorine-containing contaminants, including:
(a) a distillation column having at least two inlets and at least two outlets; (b) a first supply configured to supply a column vapor feed stream (stream in gas phase), including fluorine-containing contaminants, to the distillation column; (c) a second supply configured to supply cations of one or more metals to the distillation column; (d) a first discharge line configured to recover a fluorine-depleted column vapor discharge stream from the top of the distillation column; and (e) a second discharge configured to discharge a fluorine-enriched column liquid discharge stream from the bottom of the distillation column.

In examples, a method of depleting fluorine-containing contaminants from a column vapor feed stream is disclosed, which method may include: contacting the column vapor feed stream with a column liquid feed stream, wherein the column liquid feed stream comprises a liquid stream including cations from one or more metals.

In examples, disclosed is the use of a liquid, e.g. liquid nitric acid, containing cations of at least one metal for depleting fluorine-containing contaminants from nitric acid in gas phase.

### BRIEF DESCRIPTION OF THE FIGURES

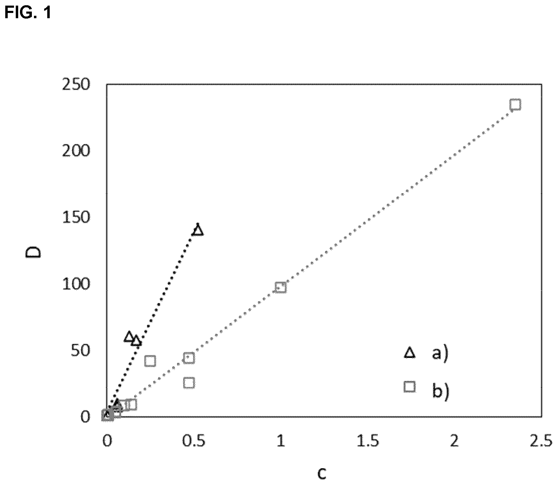

**Figure 1****:** Decrease of the volatility of fluorides represented by the Fluoride volatility reduction factor (D) depending on the concentration of dissolved aluminum (c in mol/L) in nitric acid - fluoride mixtures with a) 65 wt% HNO3, and b) 40 wt% HNO3.

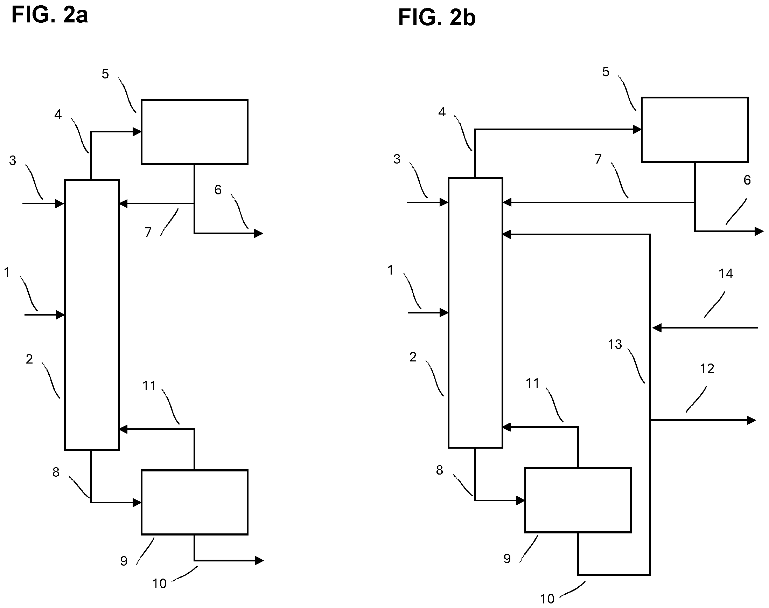

**Figures 2a and 2b****:** Examples of a schematic setup of apparatus to carry out a process as described herein. FIG. 2**a:** configuration including optional reboiler, but no recycling of reboiler discharge stream; FIG. 2**b:** configuration including optional reboiler and recycling of reboiler discharge stream. Reference signs: (1) first supply line for the column vapor feed; (2) distillation column; (3) second supply line for the column liquid feed; (4) first outlet line for the column vapor discharge; (5) condenser; (6) & (7) condenser discharge (10) & (13) reboiler liquid discharge; (14) recycle supplementation stream; (8) second discharge line for the column liquid discharge from column; (9) reboiler; (11) vapor line; (12) liquid discharge of fluoride bleed.

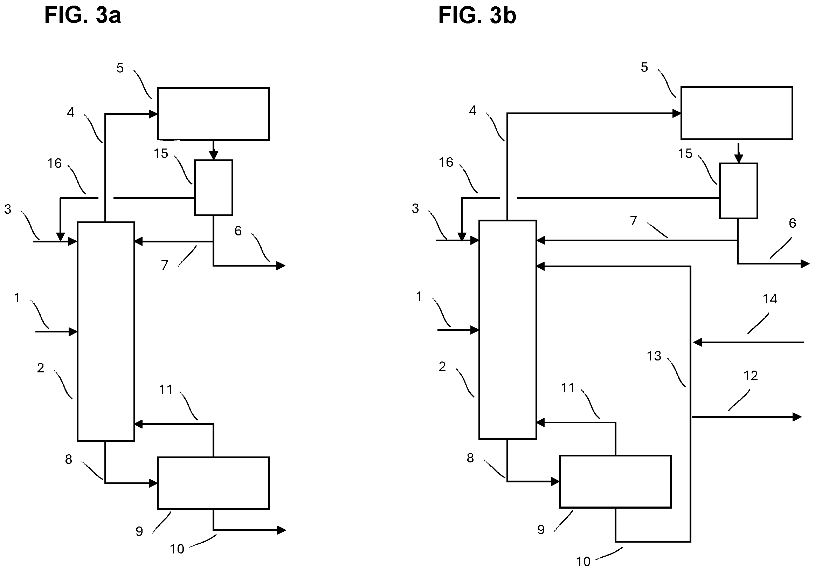

**Figures 3a and 3b****:** Examples of a schematic setup of apparatus to carry out a process as described herein. FIG. 3**a:** configuration corresponding to that of Fig. 2a, but additionally depicting a container (15) and an optional line (16) connecting the container (15) to the second supply line (3). FIG. 3**b:** configuration corresponding to that of Fig. 2a, but additionally depicting a container (15) and an optional line (16) connecting the container (15) to the second supply line (3). Reference signs already used in Figures 2a and 2b have the same meaning.

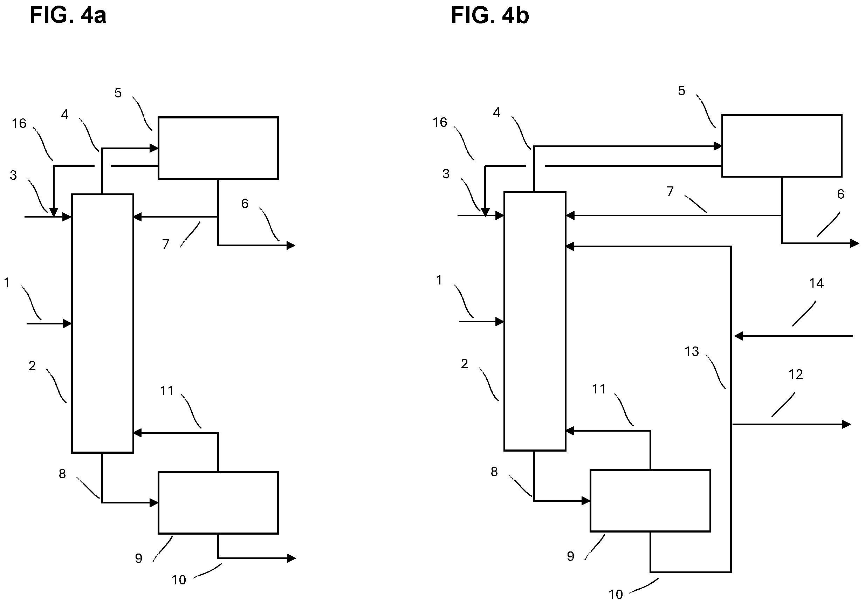

**Figures 4a and 4b****:** Examples of a schematic setup of apparatus to carry out a process as described herein. FIG. 4**a:** configuration corresponding to that of Fig. 2a, but additionally depicting a line (16) connecting the condenser (5) to the second supply line (3). FIG. 4**b:** configuration corresponding to that of Fig. 2b, but additionally depicting a line (16) connecting the condenser (5) to the second supply line (3). Reference signs already used in Figures 2a and 2b have the same meaning.

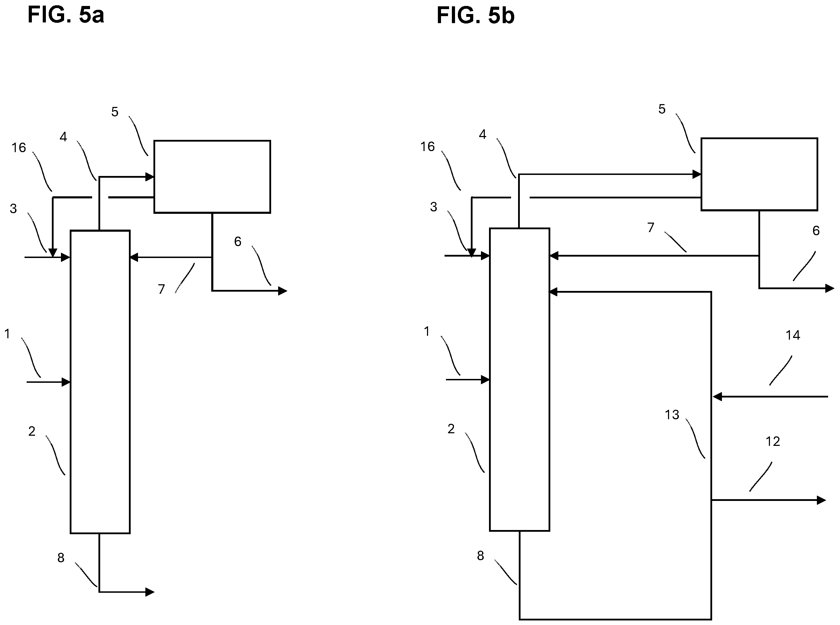

**Figures 5a and 5b****:** Examples of a schematic setup of apparatus to carry out a process as described herein. FIG. 5**a:** configuration not including reboiler and no recycling of reboiler discharge stream; FIG. 5**b:** configuration not including optional reboiler, but recycling of reboiler discharge stream. Reference signs already used in Figures 2a and 2b have the same meaning.

### DETAILED DESCRIPTION OF THE INVENTION

In examples, disclosed is a process and system for the purification of nitric acid from fluorine-containing contaminants. The process may include contacting a column vapor feed stream (i.e. a stream fed to the column in gas phase), including fluorine-containing contaminants, with a column liquid feed stream (i.e. a stream present in the column in liquid phase), containing cations of one or more metals ("one or more metals" also being referred to as "at least one metal" herein), in a distillation column. Contacting the column vapor feed stream with the column liquid feed stream can deplete the fluorine-containing contaminants from the column vapor feed stream. After the contacting, nitric acid depleted in fluorine-containing contaminants can be recovered as a column vapor discharge stream (i.e. a stream leaving the column in gas phase).

For purposes of this disclosure, nitric acid in "gas phase," or "vapor phase" also referred to as "nitric acid vapors" as used herein, mean nitric acid that has been subjected to elevated temperature and/or reduced pressure to evaporate it. In the gas phase, the concentration of nitric acid can particularly be from about 20 wt% and up to 100 wt%.

Conversely, nitric acid in "liquid phase" or "liquid nitric acid" as used herein refer to a HNOs/water mixture. In examples, nitric acid in liquid phase may include a concentration of HNOs ranging from about 20 wt% and up to about 100 wt%. Pure HNOs has a boiling point of 83 °C at ambient pressure.

In examples, nitric acid may be used at a concentration of about 65 wt% (wherein wt% means percent by weight of the respective total composition).

In examples, cations of one or more metals may be used to form non-volatile complexes with fluoride anions (F⁻), also simply referred to as "fluorides" herein, in nitric acid. In examples, by binding one or more fluorine-containing contaminants, e.g fluorides, in the liquid phase, the volatility of the one or more fluorine-containing contaminants, e.g. fluorides, can be decreased. In examples, the volatility of one or more fluorine-containing contaminants, may be decreased by a factor of 5 to 250 depending on the concentration of nitric acid and dissolved metal cations. In examples, the volatility of fluorides may be decreased by a factor of 5 to 250 depending on the concentration of nitric acid and dissolved metal cations. This effect may be particularly pronounced for cations of one or more metals (for brevity also referred to as "metal cations" herein) selected from the group consisting of aluminum, zirconium, iron, magnesium, calcium, lithium, sodium, potassium and any combination thereof. In examples, the cations may be from one or more metals selected from the group consisting of aluminum, zirconium and iron. In **Figure 1**, this effect is illustrated for the example of aluminum.

In examples, however, the volatility of fluorides increases with increased nitric acid concentrations while temperature and pressure have a negligible effect. For example, a higher nitric acid concentration of, e.g., about 45 to 100 wt% HNOs, may yield a distribution coefficient of the fluorides α > 1. "Distribution coefficient" as used herein means, e.g. for fluorides, the ratio of the fluorine concentration in the vapor phase and the fluorides concentration in the liquid phase. Therefore, when purifying concentrated nitric acid with a concentration > 20 wt% HNOs, a low fluorine content of less than 10 ppm is not achievable by aluminum addition with a simple distillation setup as described in the prior art. This may be the case even though, for instance, fluoride distribution coefficient may be reduced by fluoride volatility reduction factor 10 to 150 with fluoride loadings as high as 10 to 500 g F/kg Al with nitric acid of 65 wt% HNOs."Fluoride volatility reduction factor" as used herein means the ratio between distribution coefficient of fluorides in a system without metal cations and the distribution coefficient in a system with metal cations. For example, a fluoride volatility reduction factor of 10 means that the initial distribution coefficient in a system without metal cations is reduced by a factor of 10 is a system with metal cations. For example, if an initial distribution coefficient in a system without metal cations is 1, a fluoride volatility reduction factor of 10 would mean that the distribution coefficient would become 0.1 in a system with one or more metal cations.

Despite the fluoride volatility reduction effect of metal cations, such as aluminum, this and some other metals like lithium, calcium, magnesium and iron have a contrary effect on the volatility of nitric acid. Therefore, in examples, it is possible to utilize metal cations, which may e.g. be obtained by dissolving one or more metals or metal salts, to decrease the volatility of fluorides and at the same time increase the volatility of the nitric acid. In examples, this may allow for an accumulation of fluorides in the liquid phase, while the majority of nitric acid can be evaporated at high concentrations, such as at least about 20 wt% HNOs, e.g. from about 20 wt% to about 100 wt% HNOs, from about 45 wt% to about 99 wt% HNOs, or from about 55 wt% to about 75 wt% HNOs, or about 65 wt% HNOs based on the total weight of the column vapor feed stream.

In examples, the separation may be carried out using countercurrent flow of the liquid feed stream, e.g. a liquid nitric acid feed stream, relative to the feed stream in the gas phase. This may further improve separation performance. In examples, the evaporation of contaminated nitric acid may be performed through a distillation column. In examples, a feed stream in liquid phase ("column liquid feed stream"), e.g. a liquid nitric acid feed stream, with one or more cations of one or more metals (also referred to as "dissolved metal cations" herein) may be directed to flow in counter-flow to a feed stream in gas phase including fluorine-containing contaminants, e.g. a nitric acid feed stream in gas phase (also referred to as "contaminated nitric acid vapor" or "column vapor feed stream"). In examples, this may yield one or more theoretical separation stages in the distillation column. In examples, the set up may yield from 1 to 20 theoretical separation stages. In examples, this may increase if not maximize the separation performance towards nitric acid (with the increased volatility) and fluorine-containing contaminants, e.g. fluorides (with the decreased volatility).

In examples, the process may include at least two steps. In a first step of the process, a column vapor feed stream and column liquid feed stream may be brought into contact with each other. In examples, the column vapor feed stream may include one or more fluorine-containing contaminants. In examples, the column liquid feed stream, e.g. liquid phase nitric acid stream, may include cations of one or more metals. In examples, the column vapor feed stream may be contacted with the column liquid feed stream. In examples, contacting the two streams may take place in a distillation column. In examples, the contacting step may deplete the fluorine-containing contaminants from the column vapor feed stream in the gas phase. In examples, the contacting step may enrich the column liquid feed stream, with the fluorine-containing contaminants.

In examples, in the second step of the process, the fluorine-depleted nitric acid stream in gas phase may be recovered as a column vapor discharge stream.

In examples, the process may include one or more additional steps. For instance, the process may include condensing the column vapor discharge stream of fluorine-depleted nitric acid. In examples, condensation of the column vapor discharge stream may be performed in a condenser, to which the column vapor discharge stream may be directed once recovered. Such recovery may, in examples, be performed at the top of the distillation column. Suitable conditions for condensing the column vapor discharge stream may be the same operating pressures as the distillation column operates like between 2 kPa and 5 MPa, preferably between 5 kPa and 1 MPa, most preferably between 20 kPa and 0.5 MPa, or about atmospheric pressure like 0.1 MPa. The condensation of the nitric acid may also be performed at pressures below the operating pressure of the distillation column. The nitric acid content in the column vapor discharge stream may be at least about 20 wt% HNOs, e.g. from about 20 wt% to about 100 wt% HNOs, from about 45 wt% to about 99 wt% HNOs, or from about 55 wt% to about 75 wt% HNOs, or about 65 wt% HNOs based on the total weight of the column vapor feed stream. Depending on the pressure in the condenser and the concentration of the nitric acid in the column vapor discharge stream, the condensation temperature may range from 15 to 250 °C, preferably between 50 and 150 °C by selecting an appropriate combination between pressure and concentration.

In examples, the process may include collecting a condensed nitric acid stream. The condensed nitric acid stream may be the column vapor discharge stream recovered from the distillation column. "Collecting" may be done for instance in a vessel or in a line. The collected condensed nitric acid stream may, in examples, be at least partially recycled into the distillation column or may be used for other purposes. The partially recycled fraction of the condensed nitric acid stream may be mixed with metal compounds to yield the column liquid feed stream.

In examples, the process may include discharging a metal cation-containing liquid stream, e.g. liquid nitric acid stream, enriched in fluorine-containing contaminants from the distillation column as a column liquid discharge stream. Sometimes, this column liquid discharge stream may be referred to as "waste acid".

In examples, the fluorine-containing contaminants may be fluorides. Where the fluorine-containing contaminants are compounds other than fluorides, for better comparison the amount of fluorides may be determined via conversion factors. Such conversion factors may be determined based on the molecular weights of the elements constituting the respective contaminant. From the total molecular weight of the compound (e.g. 100 g/mol), the weight percentage of fluorides (molecular weight: 19 g/mol) may be determined (in the example: 19/100 = 19 wt%). The conversion factor is then 1/wt% fluorides × 100 (in the example: 1/19 × 100 = 5.3). By applying this method, the amount of any fluorine-containing contaminant may be converted into the corresponding amount of fluorides. This may be reflected herein by referring to fluorine-containing contaminants "corresponding to" a certain amount (wt% or ppm) of fluorides.

In examples, the column liquid discharge stream may contain fluorine-containing contaminants corresponding to at least 500 ppm fluorides. In examples, the column liquid discharge stream may contain fluorine-containing contaminants corresponding to at least 700 ppm fluorides, or at least 1000 ppm fluorides. The fluorine-containing contaminants may be present e.g. as fluorides, for instance as aluminum fluoride (AlF₃).

As will be appreciated by the skilled person, collecting the condensed nitric acid requires that nitric acid (in this case a column vapor discharge stream) be condensed first. In certain embodiments, the process includes all three of the recited additional steps, i.e. condensing the column vapor discharge stream, collecting the condensed column vapor discharge stream, and discharging metal cation-containing liquid nitric acid stream enriched in fluorine-containing contaminants from the distillation column as a column liquid discharge stream.

In examples, the process may also further include recycling at least a fraction of the condensed column vapor discharge stream into the distillation column. In examples, the column vapor discharge stream may be at least partially recycled into the distillation column after condensation. In examples, the complete column vapor discharge stream may be recycled into the distillation column after condensation. In examples, the column vapor discharge stream may be partially recycled into the distillation column after condensation. For instance, from about 20% to about 60%, e.g. about 20%, about 30%, about 40%, about 50% or about 60% of the column vapor discharge stream (percentage based on the total weight of the column vapor discharge stream) may be recycled. In examples, a portion, e.g. from about 20% to about 60% of the condensed column vapor discharge stream, based on the total weight of the column vapor discharge stream, may be mixed with at least one metal or metal salt and the resulting mixture may then be recycled into the distillation column. In examples, the at least one metal or metal salt may be a metal salt, for instance an aluminum salt, such as aluminum nitrate. In examples, the column vapor discharge stream may be at least partially recycled into the distillation column, and may be added to the top of the column (e.g. at any position within the 10% of the height starting from the top of the column downwards). In examples, recycling may be performed by feeding at least a fraction of the column vapor discharge stream, e.g. through a line, to e.g. the top of the distillation column.

The process may also further include evaporating nitric acid in liquid phase including fluorine-containing contaminants, thereby generating said column vapor feed stream.

In examples, evaporation may be carried out in a separate evaporator, such that the column vapor feed stream at the point of entry into the distillation column is already in gas phase. Such an evaporation can be performed by flash evaporation of superheated nitric acid into a vapor head, or by induced evaporation in kettle, thermosiphon or forced-circulation evaporators. As heat source all suitable heating media like steam or thermo oil, as well as electrical heating can be used, that achieve temperatures beyond the boiling temperature of the liquid nitric acid including fluorine-containing contaminants. In examples, evaporation may be performed at the entry position of a liquid nitric acid stream into the distillation column. In examples, a fraction of the column liquid discharge stream can be mixed with further fluorine-containing nitric acid, heated and sent to the distillation column for evaporation. The evaporation conditions to evaporate nitric acid including fluorine-containing contaminants to generate the said column vapor feed stream typically require temperatures above the temperatures in the condensation system. The evaporation is performed at pressure at or above the operating pressures of the distillation column.

In examples, the column vapor feed stream may be a dilute or concentrated nitric acid stream in the gas phase. In examples, the column vapor feed stream may have a concentration of about 20 wt% to about 100 wt% HNOs, based on the total weight of the column vapor feed stream. In examples, the column vapor feed stream may have a concentration of about 45 wt% to about 99 wt% HNOs, based on the total weight of the column vapor feed stream. In examples, the column vapor feed stream may have a concentration of about 55 wt% to about 75 wt% HNOs, based on the total weight of the column vapor feed stream. In examples, the column vapor feed stream may have a concentration of about 65 wt%, based on the total weight of the column vapor feed stream.

As already mentioned, this column vapor feed stream may include one or more fluorine-containing contaminants. It will be appreciated by the skilled person that the amount of fluorine-containing contaminants contained within the nitric acid stream is more than an insignificant amount, i.e., of a concentration that requires purification. Fluorine-containing contaminants may be different compounds. The fluorine-containing contaminants may be fluorides, in the form of ions or complexes, e.g. with silicon and aluminum, particularly in the form of fluoride ions (F⁻). Further non-limiting examples of fluorine-containing contaminants are compounds (=contaminants) that may release fluorides. These may be fluoroaromatic compounds like fluorobenzenes, fluorotoluenes, fluoroxylenes and their derivatives, nitroaromatics and the like. Sensitive detection methods for fluorine-containing contaminants are commercially available and known to the skilled person.

For example, a significant amount of fluorine-containing contaminants present in the column vapor feed stream can be about 20 ppm fluorides, or may correspond to about 20 ppm fluorides. As used herein, "ppm" means parts per million. As an example, 1 ppm fluorides in a nitric acid stream equals 1 mg per kilogram nitric acid including all other components present in the stream. The amount of fluorine-containing contaminants can also be much higher and reach a concentration of up to 1 wt% fluorides or corresponding to ≤ 1 wt% fluorides within the column vapor feed stream.

In examples, the column vapor feed stream may contain from about 20 ppm to about 800 ppm fluorides, or may correspond to from about 20 ppm to about 800 ppm fluorides. In examples, the column vapor feed stream may contain from about 50 to about 500 ppm fluorides, or may correspond to from about 50 ppm to about 500 ppm fluorides.

In examples, after accumulating the fluorine-containing contaminants by contacting the column vapor feed stream with the metal cations containing column liquid feed stream, a fluorine-depleted nitric acid stream in gas phase may be recovered as a column vapor discharge stream. As used herein, the term "depletion" means that the amount of fluorine-containing contaminants contained in the column vapor feed stream is reduced, such as by at least 25%, at least 50%, at least 75%. In examples, the amount of fluorine-containing contaminants contained in the column vapor feed stream is reduced by at least 90%, for example by at least 95%, at least 99%, at least 99.5%, or at least 99.9%. In absolute values, the column vapor discharge stream may contain fluorine-containing contaminants corresponding to less than 25 ppm fluorides. The skilled person will appreciate that this value constitutes a depletion when the initial concentration of fluorine-containing contaminants is higher than the concentration determined in the column vapor discharge stream, such as at least 25%, at least 50%, or at least 75% higher. In examples, the initial concentration of fluorine-containing contaminants is at least 90% higher than the concentration determined in the column vapor discharge stream. In an example, the column vapor discharge stream may contain fluorine-containing contaminants corresponding to less than 25 ppm fluorides, and the initial concentration of fluorine-containing contaminants may have been at least 250 ppm.

In examples, the column vapor discharge stream may contain fluorine-containing contaminants corresponding to less than 10 ppm fluorides, or less than 5 ppm fluorides. In examples, the column vapor discharge stream may contain fluorine-containing contaminants corresponding to only about 1 ppm fluorides or less.

In examples, the column vapor discharge stream may contain less than 25 ppm fluorides. In examples, the column vapor discharge stream may contain less than 10 ppm fluorides, or less than 5 ppm fluorides. In examples, the column vapor discharge stream may contain less than 1 ppm fluorides.

In examples, the process and system as described employ the use of a liquid stream including cations of one or more metals (also referred to herein as "column liquid feed stream"). In examples, the column liquid feed stream may include nitric acid. In examples, the column liquid feed stream may consist of nitric acid including cations of one or more metals. The column liquid feed stream can include cations from a single metal or from a plurality of metals. For example, the column liquid feed stream may include cations from one metal, two metals, three metals or four metals. In examples, the metals may be the same or different. In examples, the column liquid feed stream may include cations of one or two metals. In examples, the column liquid feed stream may include cations from a single metal.

In examples, the cations in the column liquid feed stream may be from one or more metals selected from the group consisting of metals pertaining to any one of Groups 1, 2, 4, 8, 13 and at the same time to any one of Periods 2, 3, 4, 5 of the Periodic Table of Elements (PTE). Thus, the one or more metals may be selected from the group consisting of lithium, sodium, potassium, rubidium (Group 1 of the PTE), beryllium, magnesium, calcium, strontium (Group 2 of the PTE), titanium, zirconium (Group 4 of the PTE), iron, ruthenium (Group 8 of the PTE), aluminum, gallium, indium (Group 13 of the PTE).

In examples, the cations may be from one or more metals selected from metals pertaining to any one of Groups 1, 2, 4, 8, 13 and at the same time to any one of Periods 2, 3, 4, 5 of the PTE with a molecular weight of less than 100 g/mol. The molecular weight of the elements of the PTE is known to the skilled person.

In examples, the cations may be from one or more metals selected from the group consisting of aluminum, zirconium, iron, magnesium, calcium, lithium, sodium, potassium and any combination thereof. In examples, the cations may be from one or more metals selected from the group consisting of aluminum, zirconium and iron. In examples the cations from one or more metals include aluminum cations. In examples, the cations are from a single metal and that metal is aluminum.

The metal cations in the column liquid feed stream may be provided by introducing one or more metal compounds in different forms into this stream. A "metal compound" as used herein may either be the pure element or any reaction product thereof, such as salts like oxides, hydroxides, carbonates, sulphates or nitrates. In examples, the at least one metal compound may be provided in solid form, e.g. as the pure element, metal salt, particularly nitrate salt, or any combination thereof. In exemplary embodiments, the at least one metal compound may be provided as metal salt or metal salts, e.g. as an aluminum salt such as aluminum nitrate. The form in which the metal compound is provided may be independently selected for each metal compound used. The one or more metal compounds in solid form may be mixed with liquid stream including nitric acid or consisting of nitric acid. For example, the one or more metal compounds in solid form may be mixed with a nitric acid stream, e.g. to yield the column liquid feed stream. In the resulting mixture, the one or more metal compounds in solid form may either react with the nitric acid stream, which may be the case for pure elements, or the one or more metal compounds in solid form may be dissolved, which may be the case for metal salts. Either way, the resulting stream then may contain metal cations derived from the one or more metal compounds.

It is also encompassed to provide the one or more metal compounds in at least partially dissolved form, particularly in a substantially completely dissolved form, i.e. as a solution. Solvents for providing the at least one metal compound in at least partially dissolved form may be nitric acid, water, or a mixture of nitric acid and water. "At least partially dissolved" as used herein means that a significant portion, such as at least about 20 wt%, at least about 30 wt%, at least about 40 wt%, at least about 50 wt%, at least about 60 wt%, at least about 70 wt%, at least about 80 wt%, or at least about 90 wt% (each based on the total weight of the one or more solid metal compounds of the one or more metal compounds) is present in dissolved form. An at least partial dissolution means that a significant portion of the metal compound(s) is then present in its ionic form. For purposes of this disclosure, "substantially completely dissolved" means a dissolution of at least 95 wt%, particularly at least 99 wt% of the metal compound in solid form based on the total amount of metal compound. Within the one or more metal compounds in at least partially dissolved form, metal cations may already be present. For example, one or more metals, e.g. a metal salt, can be dissolved in water and then mixed with a liquid nitric acid stream to provide the column liquid feed stream including cations of one or more metals.

In examples, the one or more metal compounds may be provided in solid form, e.g. as a solid metal salt like oxides, hydroxides, sulphates, nitrates, or any combination thereof. For purposes of this disclosure, as suitable solid metal salts oxides, hydroxides, carbonates, sulphates, or nitrates of aluminum, zirconium, iron, magnesium, calcium, lithium, sodium, potassium may be mentioned. These salts may be the anhydrous (water-free) form or their hydrates, like mono-, di-, tri-, tetra-, penta- , hexa-, hepta-, octa-, or nonahydrates. It may be preferable to use the anhydrous or lower hydrates forms, where available.

In examples, the one or more metal compounds may be provided in at least partially dissolved form, particularly in a substantially completely dissolved form, i.e. as a solution, for instance as an aqueous solution of one or more metal salts. For purposes of this disclosure, as suitable aqueous solutions of metal salts may be aqueous solutions of oxides, hydroxides, sulphates, or nitrates of aluminum, zirconium, iron, magnesium, calcium, lithium, sodium, potassium. In examples, the one or more metal compounds may be provided as an aqueous nitrate solution, such as an aluminum nitrate solution. Such an aluminum nitrate solution may be a nitric acid saturated with aluminum. The metal salts may be dissolved in water or mixtures of nitric acid and water at environmental temperatures like 20 °C or 25 °C. The content of nitric acid in the mixture depends on the nitric acid concentration of the solution used to dissolve the metal compounds. The saturation concentration of aluminum under such conditions depends on the amount of nitric acid in the mixture and is between 0 and 50 g Al per kg mixture. A solution containing magnesium cations under the mentioned conditions is saturated between 0 and 70 g Mg per kg mixture and a solution containing calcium cations is saturated with a content between 0 and 140 g Ca per kg mixture. In most cases, particularly in case of aluminum, zirconium, iron, magnesium, calcium and lithium, the saturation concentration increases with rising temperature and higher concentrations of metal cation can be provided if the mixture used as the column liquid feed stream is prepared at temperatures above environmental temperature. For other metal compounds and metal cations the saturation concentration can be determined with methods known to the skilled person.

In examples, the process may be characterized further by the mass ratio between metal and fluorine (Me/F). The mass of fluorine may be determined from the amount of column vapor feed stream (which contains the fluorine-containing contaminants), whereas the mass of metal(s) is known from the amount added to the column liquid feed stream and possibly further nitric acid streams. In examples, the mass ratio between metal and fluorine (Me/F) is from about 0.5 to about 500. In examples, the mass ratio between metal and fluorine (Me/F) is from about 1 to about 200, or from about 5 to about 50. For example, a column vapor feed stream of 100 kg per hour, which contains 1 wt% fluorides, and column liquid feed stream of 50 kg/h with a metal content of 40 g Me/kg mixture yields a mass ratio of metal and fluorides of (50 kg/h × 40 g Me/kg / 1000 g/kg ) / (100 kg/h × 0.1 wt% F / 100 wt% ) = 20.

In examples, the metal selected for providing the metal cations may be aluminum. In those examples, the same ratios as indicated above may in general be applicable. In examples, the mass ratio between aluminum and fluorine (Al/F) may be from about 0.5 to about 500, particularly from about 1 to about 200. In certain preferred embodiments, Al/F may be from about 5 to about 50.

In examples, the column vapor feed stream (containing fluorine-containing contaminants) and the column liquid feed stream, which includes cations of one or more metals, may be brought into contact with each other in a distillation column. In examples, the column liquid feed stream may be supplied to the distillation column as such, i.e. in a form already containing cations of one or more metals. This may be achieved for example by dissolving one or more metals in the column liquid feed stream prior to injecting the column liquid feed stream into the distillation column. Alternatively, the column liquid feed stream may be prepared *in situ.* In examples, the column liquid feed stream may be introduced into the distillation column. The column liquid feed stream can include fresh nitric acid. In examples, the liquid column liquid feed stream may include at least a fraction of the condensed column vapor discharge stream, i.e., a recycled fraction of the condensed column vapor discharge stream. In examples, it may be possible to use up to 100% recycled fraction of the condensed column vapor discharge stream. In examples, the recycled fraction may be > 50% of the total condensed column vapor discharge stream. The recycled fraction of the condensed column vapor discharge stream used as part of the column liquid feed stream may have a concentration of at least about 20 wt%, and up to 100 wt%. In exemplary embodiments, the recycled fraction of the condensed column vapor discharge stream used as part of the column liquid feed stream has a concentration of about 65 wt% HNOs.

In examples, cations of one or more metals may be added by introducing one or more metal compounds in solid or dissolved form into the liquid nitric acid stream in the distillation column. In examples, cations of one or more metals may be added to the liquid nitric acid stream before it enters the distillation columns. In examples, the metal compound(s) may be provided in solid form, e.g. as the pure element or metal salt, particularly nitrate. Alternatively, the metal compound(s) may be provided in at least partially dissolved form. In examples, the metal compound(s) may be provided in a substantially completely dissolved form. Advantageous solvents for dissolving the metal compound(s) may be nitric acid and/or water, for example nitric acid in the same concentration as the nitric acid in the column.

In examples, the process may further include mixing one or more solid metal compounds with a liquid. The liquid may particularly be nitric acid/water mixture. As used herein, "nitric acid" refers to a mixture of HNOs and water, which is implied by mentioning concentrations. In examples, the one or more solid metal compounds may be at least partially dissolved in the liquid. In examples, the one or more solid metal compounds may be substantially completely dissolved in the liquid. In examples, the one or more solid metal compounds may be at least partially or substantially completely dissolved in nitric acid, and the resulting nitric acid stream may be used as the column liquid feed stream.

In certain embodiments, the process may include recycling at least a fraction of the condensed column vapor discharge stream into the distillation column. In examples, the column vapor discharge stream may be condensed, for example in a vapor condenser and then at least partially recycled, into the distillation column. "Recycling at least a fraction" as used herein means that a significant amount, such as at least about 20%, at least about 30%, at least about 40%, at least about 50%, at least about 60%, at least about 70%, at least about 80%, or at least about 90% of a certain stream is fed back from outside the distillation column into the distillation column. In examples, at least a fraction of the column vapor discharge stream is recycled into the distillation column as a reflux stream. In examples, the recycled fraction of the optionally condensed column vapor discharge stream may be used for *in situ* preparation of the column liquid feed stream. For instance, the recycled fraction of the optionally condensed column vapor discharge stream may be mixed with a metal salt, particularly an aluminum salt, such as aluminum nitrate, and added to the distillation column. The mixing may be performed inside the distillation column, or by admixing the metal into the column vapor discharge stream fraction intended to be recycled before it enters the distillation column.

In examples, the distillation column may be any distillation column known to the skilled person suitable for use with nitric acid. In particular, the distillation column is a distillation column with counter-flow. The distillation column may have one or multiple separation stages. In examples, the distillation column may include 1 to 20 separation stages. In examples, the separation stages may be defined as theoretical separation stages; "theoretical separation stages" as used herein is understood as a theoretical concept to describe the performance of a distillation column. A theoretical stage may be defined as having an ideal separation performance, i.e. achieving the theoretic equilibrium. Assuming a theoretical separation stage has a performance of 1 (i.e. achieving the theoretic equilibrium), separation stages in practice (or "actual separation stages" always equal 1 or less theoretical separation stages. In examples the distillation column may include 1 to 20 theoretical separation stages, for example, more than 1 and up to 15 theoretical separation stages. Actual separation stages in the distillation column with an ideal or non-ideal separation performance may e.g. be trays. In examples, the distillation column may include 1 to 20 actual separation stages, for example 1 to 15 actual separation stages.

In examples, the process may be carried out batchwise or as a continuous process. A batch process is understood as a process that leads to the production of finite quantities of material, such as e.g. purified nitric acid. Instead of a continuous flow, batch processing involves limited quantities of material called batches. By the nature of the process, a batch process is discontinuous. The process is started with a defined amount of raw material, and stopped once the raw material has passed all processing steps. Then, a further batch of new raw material can be subjected to the process. By contrast, a continuous process involves the continuous flow of material through the processing equipment. Once a continuous process is operating in a steady state, the goal is to produce a consistent product independent of the time of process operation. In examples, the process is a continuous process.

Suitable operating conditions for the inventive process can be selected by the skilled person based on the guidance provided herein. In examples, the process operating temperature may be from about 15°C to about 250°C, particularly from about 50 °C to about 150 °C. In exemplary embodiments, the process may be operated at a temperature of from about 75 °C to about 125 °C. The process pressure may be from about 2 kPa to about 5 MPa, particularly from about 5 kPa to about 1 MPa. In exemplary embodiments, the process is operated at a pressure of from about 20 kPa to about 0.5 MPa.

In examples, the process may be operated at a temperature of about 75 °C to about 125 °C, and at a pressure of about 20 kPa to about 200 kPa.

In examples, the process and system may be operated as a standalone process, or may be integrated into another nitric acid evaporation or distillation process. If integrated into another nitric acid evaporation or distillation process (e.g. as described in DE 10302955 A1 and DE10 2005 006027 A1, the contents of which are incorporated by reference herein), nitric acid comprising fluorine-containing contaminants can be received already in vapor-form from the process it is integrated in, to minimize the energy demand for the purification step. This may further require that the process be operated at the same pressure as the distillation process(es) in which it is integrated. As mentioned above, in examples, the process and system can for instance be operated at pressures of 5 kPa to 5 MPa. As the column liquid feed stream is at boiling conditions in the distillation column, the temperature may be defined by the system pressure and concentration of nitric acid. In examples, the temperature may be about 15 °C to about 250 °C.

In order to be able to determine the efficiency of purification at any time, in examples, the process may include determining the residual concentration of fluorine-containing contaminants (and, e.g. via calculations, the residual concentration of fluorine) in the, optionally condensed, column vapor discharge stream. In examples, this may be done by potentiometry using an ion-selective electrode. Alternative methods include ion-chromatography, or other chromatographical methods, or mass spectrometry. In case the determined residual concentration of fluorine-containing contaminants, e.g. fluorides, does not meet desired specifications, the column vapor discharge stream may, in examples, be recycled as a whole into the distillation column to increase purification efficiency.

Where the process includes recycling at least a fraction of the condensed column vapor discharge stream, particularly after condensation, into the distillation column, the process may further include evaporating a reboiler vapor discharge stream in a reboiler from the metal cation-containing column liquid discharge stream discharged from the distillation column. To that end, the column liquid discharge stream, which has taken up at least a fraction of the fluorine-containing contaminants such as fluorides from the column vapor feed stream, may be transferred, e.g. via a line, for example into a reboiler. Within the reboiler, evaporation may be performed.

In examples, the process may further include recycling at least a fraction of the column liquid discharge stream into the distillation column. In examples, the process may further include recycling at least a fraction of the reboiler vapor discharge stream into the distillation column. In examples, at least a fraction of both the column liquid discharge stream and the reboiler vapor discharge stream may be recycled into the distillation column. Given that the column liquid discharge stream may contain an elevated concentration of fluorine-containing contaminants, in particular if highly contaminated column vapor feed streams are used (with e.g. a content of fluorine-containing contaminants corresponding to more than 50 ppm fluorides, a content of fluorine-containing contaminants corresponding to more than 100 ppm fluoride or even higher, such as >50 ppm fluorides or >100 ppm fluorides), the process may then further include reducing the concentration of fluorine-containing contaminants in the column liquid discharge stream or the reboiler vapor discharge stream, or both. Similarly, since the metal cation concentration may be reduced in the column liquid discharge stream or reboiler vapor discharge stream to a non-optimal level, the process may further include step of enriching the concentration of the cations of the one or more metals in the column liquid discharge stream or the reboiler vapor discharge stream, or both. In examples, the process includes both steps, i.e., reducing the concentration of fluorine-containing contaminants and enriching metal cation concentration in the column liquid discharge stream or the reboiler vapor discharge stream.

According to examples, the process as described herein may include and/or consist of: contacting a column vapor feed stream in gas phase, including from about 20 wt% to about 100 wt% HNOs and fluorine-containing contaminants corresponding to up to 1 wt% fluorides, with a column liquid feed stream in liquid phase, including cations of aluminum, zirconium, iron, magnesium, calcium, lithium, sodium, potassium or any combination thereof, particularly aluminum, zirconium, iron or any combination thereof, more particularly aluminum, in a distillation column, thereby depleting the fluorine-containing contaminants from the column vapor feed stream; recovering the nitric acid depleted in fluorine-containing contaminants as a column vapor discharge stream; condensing the column vapor discharge stream; collecting the condensed nitric acid stream; discharging the metal cation-containing liquid nitric acid enriched in fluorine-containing contaminants from the column as a column liquid discharge stream; recycling a fraction of the condensed column vapor discharge stream into the column; evaporating a reboiler vapor discharge stream from the metal cation-containing column liquid discharge stream discharged from the distillation column; and recycling at least a fraction of the column liquid discharge stream and/or at least a fraction of the reboiler vapor discharge stream into the distillation column.

In summary, some of the particularly advantageous features of examples of the described process may be the following:
- Nitric acid containing fluorine-containing contaminants, (e.g. fluoride-contaminated nitric acid) in gas phase may be run through a distillation column in counter-flow to a liquid stream consisting of dissolved metal(s) (i.e. the metal(s) is/are present as cations) to reduce the volatility of fluorine-containing contaminants, e.g. fluorides, and increase the volatility of nitric acid;
- contaminated nitric acid as liquid or vapor with nitric acid concentrations from about 20 to about 100 wt% HNOs and concentrations of fluorine-containing contaminants corresponding to from about 0 to about 1 wt% fluorides, e.g. from about 0 to about 1 wt% HF; particularly nitric acid concentrations from about 45 to 99 wt% HNOs;
- a purified nitric acid containing fluorine-containing contaminants corresponding to less than 25 ppm, less than 10 ppm, or even less than 1 ppm fluorides, wherein, in examples, the contaminants may be in the form of fluorides;
- as metal cations, for instance dissolved aluminum and, optionally, other metals such as lithium, calcium, magnesium and iron can be used to reduce the volatility of fluorides and increase the volatility of nitric acid;
- a fraction of the distillation residue can be recycled to further absorb fluorine-containing contaminants, which may be in the form of fluorides.

In examples, an apparatus for purification of nitric acid from fluorine-containing contaminants is disclosed. The apparatus includes at least the following:
(a) a distillation column having at least two inlets and at least two outlets;
(b) a first supply configured to supply a column vapor feed stream, including fluorine-containing contaminants, to the distillation column;
(c) a second supply configured to supply cations of one or more metals to the distillation column;
(d) a first discharge line configured to recover a column vapor discharge stream from the top of the distillation column; and
(e) a second discharge configured to discharge a column liquid discharge stream from the bottom of the distillation column.

The at least two inlets serve to introduce the nitric acid feed, i.e. the nitric acid to be purified, and the cations of one or more metals, also referred to as "the metal cations" or "metal feed". The at least two inlets (a) may be directly or indirectly connected to the first supply (b) and the second supply (c). The nitric acid position can be defined considering the level of fluorine contamination, i.e. the concentration of fluorine-containing contaminants. In particular, the column vapor feed stream may be supplied in gas phase. Supplying the column vapor feed stream in gas phase may be useful where no reboiler (see below) is present.

In examples that include recycling of nitric acid (e.g. from a condenser and/or from a reboiler), the number of inlets may be increased. The at least two outlets serve to discharge liquid nitric acid, for example a stream enriched in metal cations and fluorine-containing contaminants (as a column liquid discharge stream) and to allow purified nitric acid, which may be in gas phase (column vapor discharge stream) to exit the column, for example into a first discharge line (d). From the first discharge line, the column vapor discharge stream may be fed into a condenser, which may, in examples, pertain to the apparatus. The second discharge for the liquid (e) may be positioned at or near the bottom of the distillation column. The outlet for the purified nitric acid may be positioned at or near the top of the distillation column. In examples, the outlet may be at any position within the 10% of the height starting from the top of the column downwards).

The distillation column can be any type of distillation column with one or more than one theoretical separation stage. In particular, it may be a column with random packing, structured packing or with trays like bubble cap trays. To achieve the desired purity of the nitric acid, 1 to 20 theoretical separation stages may be advantageous. In examples, the distillation column may be structured such that it may have 1 to 20 theoretical separation stages. In examples, the distillation column may be structured such that it may have more than 1 and up to 15 theoretical separation stages. In examples, the distillation column may have more than 1 and up to 15 actual separation stages.

In examples, the apparatus may include further parts. For instance, in examples, the apparatus may further include a condenser configured to condense the column vapor discharge stream. Such a condenser can be any type of condenser appropriate for condensing nitric acid of the expected concentrations at the expected pressure and temperatures. Particularly, these might be indirect condensers using heat exchangers made of corrosion-resistant materials, or direct condensers condensing the nitric acid in direct contact with a cold liquid. Where a condenser is present, the apparatus may include, in addition to the condenser, a third discharge configured to discharge the condensed nitric acid (column vapor discharge stream) from the condenser. The discharged and condensed column vapor discharge stream may optionally be collected in a container configured to collect the condensed nitric acid. The container may have at least one inlet and at least one outlet. The inlet may be directly or indirectly connected to the condenser. The outlet may be directly or indirectly connected to the distillation column, for example to the upper half distillation column (e.g. at any position within the 50% of the height starting from the top of the column downwards). Alternatively, the outlet may be directly or indirectly connected to the second supply.

In examples of the apparatus including a condenser, at least a fraction of the column vapor discharge stream (purified nitric acid) may be recycled into the distillation column. Accordingly, in examples, the apparatus may include a second line configured to recycle at least a fraction of the condensed nitric acid into the distillation column as a reflux, or to the second supply to be used in preparing the metal feed (e.g. a feed slurry with solid metal).

In examples, the apparatus includes a condenser, and at least a fraction of the metal-enriched nitric acid (column liquid discharge stream) may be recycled. Accordingly, in examples, the apparatus may include a third line configured to recycle at least a fraction of the column liquid discharge stream discharged from the distillation column back into the distillation column. The third line may be directly or indirectly connected to the distillation column, for example to the upper half of the distillation column (e.g. at any position within the 50% of the height starting from the top of the column downwards). Alternatively, the third line may be directly or indirectly connected to the lower half of the distillation column (e.g. at any position within the 50% of the height starting from the bottom of the column upwards).

In yet further embodiments, the apparatus may further include a reboiler configured to evaporate nitric acid. Such a reboiler may be any type of reboiler appropriate to evaporate nitric acid from a liquid containing nitric acid dissolved metal salts and fluorine-containing contaminants. Particularly, this may be a kettle type, thermosiphon or forced-circulation reboiler consisting of at least a heat source and optionally other components known to the skilled person. Particularly, such a reboiler may consist of corrosion resistant materials like fluoropolymers, ceramics, and certain metals. In examples, the reboiler may be configured to evaporate a reboiler vapor discharge stream from the column liquid discharge stream. In examples, the column liquid discharge stream may enter the reboiler and be heated, such that a reboiler vapor discharge stream can exit the reboiler into a fourth line. In examples, the reboiler may include a fourth discharge configured to discharge a reboiler liquid discharge stream from the reboiler. The reboiler liquid discharge stream may be in liquid phase. The heat provided by the reboiler may be used to evaporate nitric acid (heat supply not shown in Figures), for example where it is fed from the first supply in liquid phase. In examples, use of the reboiler may minimize nitric acid losses with the liquid discharge.

In examples, the apparatus may include a reboiler and be configured to recycling metal-enriched nitric acid. Accordingly, the apparatus may further include a fourth line configured to supply the reboiler vapor discharge stream from the reboiler to the distillation column. The fourth line may be directly or indirectly connected to the lower half of the distillation column (e.g. at any position within the 50% of the height starting from the bottom of the column upwards). In examples, the apparatus may include a fifth line configured to supply the reboiler liquid discharge stream from the reboiler to the distillation column. The fifth line may be directly or indirectly connected to the upper half of the distillation column (e.g. at any position within the 50% of the height starting from the top of the column downwards). In examples, the apparatus may include both a fourth and a fifth line as defined above.

Optionally, the fifth line configured to supply the reboiler liquid discharge stream from the reboiler to the distillation column may further include a junction to a liquid discharge configured to separate at least a fraction of the reboiler liquid discharge stream, i.e. a stream of fluorine-enriched liquid nitric acid. This may sometimes be referred to as "fluoride bleed".

Optionally, the fifth line configured to supply the reboiler liquid discharge stream from the reboiler to the distillation column may further include a junction to a sixth line configured to supplement a recycle supplementation stream to the reboiler liquid discharge stream before it enters the distillation column.

In examples, at least a fraction of the reboiler liquid discharge stream may be separated if the concentration of fluorine-containing contaminants, e.g. fluorides, in the reboiler liquid discharge stream is very high, e.g. exceeding allowable limit values or target values, such as limit values of 100 ppm to 10000 ppm, depending on the case. The separated fraction of the reboiler liquid discharge stream can be treated to reduce the concentration of fluorine-containing contaminants, e.g. fluorides. Alternatively or in addition, the separated fraction of the reboiler liquid discharge stream can be enriched with metal cations. In examples, suitable cations may be lithium, calcium, magnesium, and/or iron cations. In examples, the separated fraction of the reboiler liquid discharge stream that has been treated to reduce the concentration fluorine-containing contaminants and/or enrich metal cations may be used as at least a fraction of the recycle supplementation stream, i.e. it may at least partly be re-introduced to the reboiler liquid discharge stream before it enters the distillation column.

In examples, both junctions may be present. The point of feeding the reboiler liquid discharge stream and/or recycle supplementation stream to the distillation column can be selected considering their concentration in fluorine-containing contaminants, e.g. fluorides, and the required purity of the nitric acid stream.

Thus, in examples, the apparatus may have a basic setup consisting of: a distillation column having at least two inlets and at least two outlets; a first supply configured to supply a column vapor feed stream, including fluorine-containing contaminants to the distillation column; a second supply configured to supply cations of one or more metals to the distillation column; a first discharge line for recovering a fluorine-depleted column vapor discharge stream from the top of the distillation column; and a second discharge configured to discharge a fluorine-enriched column liquid discharge stream from the bottom of the distillation column. As to possible configurations of the individual elements of the apparatus, reference is made to the detailed explanations above.

In examples, the apparatus may have a setup including a reboiler and acid recycling from condenser, and may consist of:
a distillation column having at least two inlets and at least two outlets; a first supply configured to supply a column vapor feed stream, including fluorine-containing contaminants to the distillation column; a second supply configured to supply cations of one or more metals to the distillation column; a first discharge line for recovering a fluorine-depleted column vapor discharge stream from the top of the distillation column; a second discharge configured to discharge a fluorine-enriched column liquid discharge stream from the bottom of the distillation column; a second line configured to recycle at least a fraction of the condensed nitric acid to the distillation column or to the second supply; a third line configured to recycle at least a fraction of the column liquid discharge stream discharged from the distillation column back into the distillation column; a reboiler configured to evaporate nitric acid, particularly to evaporate a reboiler vapor discharge stream from the column liquid discharge stream; a fourth discharge configured to discharge a liquid reboiler liquid discharge stream from the reboiler; and a fourth line configured to supply the reboiler vapor discharge stream from the reboiler to the distillation column. As to possible configurations of the individual elements of the apparatus, reference is made to the detailed explanations above.

In examples, the apparatus may have a setup including a reboiler, acid recycling from condenser and acid recycling from the reboiler, and may consist of:
a distillation column having at least two inlets and at least two outlets; a first supply configured to supply a column vapor feed stream, including fluorine-containing contaminants to the distillation column; a second supply configured to supply cations of one or more metals to the distillation column; a first discharge line for recovering a fluorine-depleted column vapor discharge stream from the top of the distillation column; a second discharge configured to discharge a fluorine-enriched column liquid discharge stream from the bottom of the distillation column; a second line configured to recycle at least a fraction of the condensed nitric acid to the distillation column or to the second supply; a reboiler configured to evaporate nitric acid, particularly to evaporate a reboiler vapor discharge stream from the column liquid discharge stream; and optionally a fourth discharge configured to discharge a liquid reboiler liquid discharge stream from the reboiler; and a fourth line configured to supply the reboiler vapor discharge stream and/or a fifth line configured to supply the reboiler liquid discharge stream from the reboiler to the distillation column, wherein said fifth line optionally further includes a junction to a liquid discharge configured to separate at least a fraction of fluorine-enriched liquid nitric acid; and/or a junction to a sixth line configured to supplement a recycle supplementation stream to the reboiler liquid discharge stream before it enters the distillation column. As to possible configurations of the individual elements of the apparatus, reference is made to the detailed explanations above.

In those embodiments of the apparatus, where the recycle supplementation stream is present, this stream may include liquid nitric acid and/or one or more metals or metal salts. In these embodiments, the point of feeding the combined reboiler liquid discharge stream and recycle supplementation stream into the distillation column will be selected considering the concentration in fluorine-containing contaminants, e.g. fluorides, of the combined stream and the required purity of the nitric acid.

Advantageously, the materials of construction that may be used for the apparatus can withstand the partially very harsh conditions applied. In particular, all materials of construction used may be resistant against nitric acid and hydrofluoric acid.

In examples, the distillation column may be made of fluoropolymers with fiber reinforcement. In other embodiments, the distillation column may be made of fluoropolymer-lined steel. Suitable materials for the internal parts of distillation column include fluoropolymers, carbide ceramics and alumina ceramics. Accordingly, in examples, the internal parts of distillation column may be made of fluoropolymers, carbide ceramics, alumina ceramics, or any combination thereof.

Suitable materials for the condenser include various resistant metals, such as stainless steel, titanium, tantalum or niobium, optionally combined with resistant coatings.

Accordingly, in examples, the condenser may be made of stainless steel, high-silicon stainless steel, carbide ceramics, fluoropolymers, titanium, tantalum or niobium.

As mentioned above, the distillation column may be any distillation column known to the skilled person, which is suitable for use with nitric acid. In particular, the distillation column may be a distillation column in counter-flow. The distillation column may have one or multiple separation stages. In particular embodiments, the distillation column has 1 to 20 separation stages., In examples, the distillation column is structured such that it may have 1 to 20 theoretical separation stages. In examples, the distillation column is structured such that it may have more than 1 and up to 15 theoretical separation stages. In examples, the distillation column is structured such that it may have more than 1 and up to 15 actual separation stages. In examples, the distillation column may be a column with random packing, structured packing or trays, such as bubble cap trays.

The apparatus may optionally further include at least one mixer. The mixer may be used to mix metal compound(s) in solid form with a liquid. Mixing may facilitate or enable dissolving the metal compound(s). Thereby, it can be ensured to provide a liquid (e.g. solution) with an even distribution of its constituents. In examples, the mixer may be used to mix two liquids or a liquid and a solid. The mixer can be located at different positions within the apparatus, for example upstream of the second supply.

Two possible, non-limiting example configurations of the apparatus for performing the process described herein are illustrated in **Figures 2a and 2b****.** According to the configuration of Figure 2a, the apparatus may include a feed line **(1)**, where contaminated nitric acid, e.g. with a concentration of 20 to 100 wt% HNOs and containing up to 1 wt% HF, is fed to a distillation column **(2).** The feed of nitric acid can be performed either in liquid form or in vapor form (i.e., nitric acid in gas phase) and its feed position can be defined considering the level of fluoride contamination. The distillation column can be any type of distillation column with one or more than one theoretical separation stage. According to the example described, it may be a column with random packing, structured packing or with trays like bubble cap trays. To achieve the desired purity of the nitric acid, 1 to 20 theoretical separation stages are used. The material of the column and packing must be resistant to nitric acid, particularly at concentrations from about 20 to about 100 wt% HNOs, against fluorides in the concentration from about 0 to about 1 wt% HF, and operating temperatures from about 15 °C to about 250 °C.

The apparatus may further include a feed line **(3)**, where for example aluminum and, optionally, other metals like lithium, calcium, magnesium and iron are fed to the column 2). According to the example described here, the metals can either be fed dissolved in nitric acid, water or as solids, e.g. in in the form of salts, like their respective nitrates, oxides or hydroxides. For purifying the nitric acid, aluminum may particularly be added in a mass ratio Al/F from about 0.5 to about 200, more particularly from about 5 to about 50.

At the top of the column, the purified nitric acid vapor **(4)** with a low fluorides concentration of, e.g., < 10 ppm F, and particularly < 1 ppm may be fed to a nitric acid vapor condenser **(5).** A fraction of the condensate may be recycled to the column **(2)** as reflux or can, optionally, be used to prepare the feed slurry with the solid metal feed **(3).** The majority of condensate may be discharged as purified, liquid nitric acid with a concentration equal or above the concentration in the feed **(1).** At the bottom of the distillation column, the apparatus can, optionally, be equipped with a reboiler system, particularly consisting of **(8)** the liquid discharge from the column **(2), (9)** a reboiler, **(10)** a liquid discharge from the reboiler, **(11)** a vapor feed to the distillation column **(2).** This optional reboiler system provides heat to evaporate the nitric acid in case the feed **(1)** is liquid or additional heat is required to minimize the nitric acid losses with the liquid discharge stream **(10).** According to the example described, the reboiler may be used or not used. In case the reboiler system is not used (see below, description of the configuration of Figures 5a and 5b), the liquid discharge **(8)** from the column **(2)** directly connects to stream **(10).**

According to the alternative configuration of Figure 2b, the liquid discharge stream **(10)** may be partially recycled as stream **(13)** to the column **(2)** after separating a fraction as fluoride bleed **(12).** The fraction that is recycled as stream **(13)** according to the example described can be everything from about 0 to about 99% depending on required purity of the nitric acid. Furthermore, the stream **(12)** can be treated to reduce the fluoride concentrations, e.g. according to prior art methods or can be enriched with other metals like lithium, calcium, magnesium and iron and then be recycled as stream **(14).** The point where the streams **(13)** and **(14)** are fed to the column (2) can be selected considering their fluoride concentration and the required purity of the nitric acid.

Two further non-limiting example configurations of the apparatus for performing the process described herein are illustrated in **Figures 3a and 3b****.** In addition to the configurations explained above with respect to Figures 2a and 2b, the configurations of Figures 3a and 3b additionally comprise a container **(15)** that can collect the condensed column vapor discharge stream discharged from the condenser. The configurations of Figures 3a and 3b may further comprise a line **(16)** to recycle at least a fraction of the condensed column vapor discharge stream from the container (15) to the second supply line (3).

Yet two further non-limiting example configurations of the apparatus for performing the process described herein are illustrated in **Figures 4a and 4b****.** In addition to the configurations explained above with respect to Figures 2a and 2b, the configurations of Figures 4a and 4b additionally comprise a line **(16)** that may recycle at least a fraction of column vapor discharge stream from the condenser (5) to the second supply line (3).

Yet two further non-limiting example configurations of the apparatus for performing the process described herein are illustrated in **Figures 5a and 5b****.** The configuration of Figures 5a comprises distillation column **(2),** vapor condenser **(5),** feed lines **(1)** and **(3),** outlet and discharge lines **(4), (6), (7)** and **(8)** as explained above with regard to Figure 2a. It may further comprise a line **(16)** that may recycle at least a fraction of column vapor discharge stream from the condenser (5) to the second supply line (3). Further, this configuration may be free of a reboiler system.

The configuration of Figures 5b comprises distillation column **(2),** vapor condenser **(5),** feed lines **(1)** and **(3),** outlet and discharge lines **(4), (6), (7)** and **(8)** as explained above with regard to Figure 2b. It may further comprise line **(16)** that may recycle at least a fraction of column vapor discharge stream from the condenser (5) to the second supply line (3). It may further comprise an at least partial recycle of the liquid discharge stream **(8)** as stream **(13)** to the column **(2).** Stream (13) may be treated as described above in Figure 2b. The liquid discharge **(8)** from the column **(2)** directly connects to stream **(13).**

In examples, one or more of the following advantageous features may be realized with the described apparatus:
- the apparatus can separate nitric acid and fluorine-containing contaminants, e.g. fluorides, by contacting a column vapor feed stream, which may for example be prepared by evaporating a nitric acid containing fluorine-containing contaminants (e.g. fluoride-contaminated nitric acid) in a distillation column, with a column liquid feed stream, which may include or consist of nitric acid including cations of one or more metals ("dissolved metal(s)", i.e. the metal(s) is/are present as cations); to reduce the volatility of fluorine-containing contaminants, e.g. fluorides, and increase the volatility of nitric acid; the column may be operated in counter-flow;
- the apparatus according to some examples may consist of 1) a first supply, e.g. a feed line for contaminated nitric acid, 2) a distillation column, 3) a second supply, e.g. a feed line of metal cations, e.g. metal salts, 4) a first discharge line, e.g. a vapor line for the purified nitric acid vapor, 5) a condenser, 6) a third discharge line for the purified nitric acid, 8) a second discharge, e.g. a liquid discharge line from the distillation column;
- the apparatus optionally may include 7) a line for recycling a fraction of the condensate to the column or for mixing with stream 3)
- the apparatus optionally may include 9) a reboiler for evaporation of nitric acid, 10) a liquid discharge from the reboiler, 11) a vapor line from the reboiler to the column;
- the apparatus optionally may include 12) a liquid discharge of fluoride bleed, 13) a liquid stream for recycling liquid from the column bottom to the top, 14) a second feed stream which can either be a purified bleed or metals as in stream 3);
- the apparatus may be made of materials that are resistant against nitric acid and hydrofluoric acid at the selected concentration, which may particularly range from 20 to 100 wt% HNOs and from 0 to 1 wt% HF, at the actual operating temperatures, which may range particularly from 15 to 250 °C;
- the distillation column may be made of fluoropolymers with fiber reinforcement or fluoropolymer-lined steel;
- the column internals may be made of fluoropolymers, carbide ceramics or alumina ceramics;
- some or particularly all heat exchangers can, e.g., be made of silicon carbide or fluoropolymers and optionally, the condenser can, e.g., be made of stainless steel, high-silicon stainless steel, titanium, tantalum or niobium.

In examples, a method of depleting fluorine-containing contaminants from a nitric acid stream in the gas phase is disclosed. In examples, the fluorine-containing contaminants may be fluorides, as mentioned hereinabove. Such method may include contacting a column vapor feed stream, i.e. a first nitric acid stream in gas phase, which is the nitric acid stream from which fluorine-containing contaminants shall be depleted, with a column liquid feed stream. The column liquid feed stream includes a liquid stream including cations of one or more metals. As explained in detail hereinabove, the cations of one or more metal may form non-volatile complexes with fluorine-containing contaminants, e.g. fluorides. In examples, the cations may be of one or more metals selected from the group consisting of aluminum, zirconium, iron, magnesium, calcium, lithium, sodium, potassium and any combination thereof. In examples, the metal cations may be selected from the group consisting of aluminum, zirconium and iron. In examples, the metal cations may be aluminum cations.

In examples, disclosed is the use of a liquid, e.g. liquid nitric acid, containing cations of one or more metals for depleting fluorine-containing contaminants from nitric acid in gas phase.

Such use may involve specific metal cations, i.e. the cations may be from one or more metals pertaining to any one of Groups 1, 2, 4, 8, 13 and at the same time to any one of Periods 2, 3, 4, 5 of the Periodic Table of Elements. In examples, the one or more metals may have a molecular weight of less than 100 g/mol. According to certain embodiments of the use, the cations may be from one or more metals selected from the group consisting of aluminum, zirconium, iron, magnesium, calcium, lithium, sodium, potassium and any combination thereof. In certain preferred embodiments, the cations may be from one or more metals selected from the group consisting of aluminum, zirconium and iron, and particularly may be aluminum cations.

As described hereinabove with respect to the process and apparatus, the use of liquid nitric acid containing cations of one or more metals for depleting fluorine-containing contaminants may particularly be effected in a distillation column as described. Accordingly, the distillation column may have one or multiple separation stages, e.g. 1 to 20, particularly more than 1 and up to 15 theoretical separation stages. In examples, the distillation column may have one or multiple actual separation stages, e.g. 1 to 20, or 1 to 15, or more than 1 and up to 15 actual separation stages.

In examples, one or more of the following advantages may be achieved by the process, apparatus, and/or use as described herein:
- an effective solution for the separation of nitric acid and fluorine-containing contaminants, e.g. fluorides can be provided;
- a purified nitric acid with very low residual concentrations of fluorine-containing contaminants (e.g. corresponding to < 10 ppm of fluorides) can be produced; e.g. a purified nitric acid with very low residual fluorine concentrations, particularly < 10 ppm F;
- the need for distillation under reflux can be minimized;
- integration into other evaporation processes is possible;
- the loss of nitric acid can be minimized, a very high recovery can be achieved, particularly > 90 wt% of the total weight of nitric acid used.

The invention is further illustrated by the following items.
1. A process for purification of nitric acid from fluorine-containing contaminants, including:
   contacting in a distillation column:
   a column vapor feed stream in gas phase, including fluorine-containing contaminants, with
   a column liquid feed stream in liquid phase, including cations of one or more metals, thereby depleting the fluorine-containing contaminants from the column vapor feed stream; and
   recovering nitric acid depleted in fluorine-containing contaminants as a column vapor discharge stream.
2. The process according to item 1, further including:
   condensing the column vapor discharge stream.
3. The process according to item 2, further including:
   collecting a condensed nitric acid stream.
4. The process according to any one of the preceding items, further including:
   discharging metal cation-containing liquid nitric acid enriched in fluorine-containing contaminants from the distillation column as a column liquid discharge stream.
5. The process according to any one of the preceding items, further including:
   recycling at least a fraction of the column vapor discharge stream, particularly after condensation, into the distillation column.
6. The process according to any one of the preceding items, further including:
   evaporating nitric acid in liquid phase including fluorine-containing contaminants, thereby generating said column vapor feed stream.
7. The process according to any one of the preceding items, wherein the column vapor feed stream has a concentration of from about 20 wt% to about 100 wt% HNOs, based on the total weight of the column vapor feed stream.
8. The process according to any one of the preceding items, wherein the column vapor feed stream has a concentration of from about 45 wt% to about 99 wt% HNOs, based on the total weight of the column vapor feed stream.
9. The process according to any one of the preceding items, wherein the column vapor feed stream has a concentration of from about 55 wt% to about 75 wt% HNOs, based on the total weight of the column vapor feed stream.
10. The process according to any one of the preceding items, wherein the column vapor feed stream has a concentration of about 65 wt% HNOs, based on the total weight of the column vapor feed stream.
11. The process according to any one of the preceding items, wherein the column vapor feed stream contains fluorine-containing contaminants corresponding to up to 1 wt% fluorides.
12. The process according to any one of the preceding items, wherein the column vapor feed stream contains fluorine-containing contaminants corresponding to from about 20 ppm to about 800 ppm fluorides.
13. The process according to any one of the preceding items, wherein the column vapor feed stream contains fluorine-containing contaminants corresponding to from about 50 ppm to about 500 ppm fluorides.
14. The process according to any one of the preceding items, wherein the fluorine-containing contaminants are fluorides.
15. The process according to any one of items 1-10, wherein the column vapor feed stream contains up to 1 wt% fluorides.
16. The process according to any one of items 1-10, wherein the column vapor feed stream contains from about 20 ppm to about 800 ppm fluorides.
17. The process according to any one of items 1-10, wherein the column vapor feed stream contains from about 50 to about 500 ppm fluorides.
18. The process according to any one of the preceding items, wherein the column vapor discharge stream contains fluorine-containing contaminants corresponding to less than 25 ppm fluorides.
19. The process according to any one of the preceding items, wherein the column vapor discharge stream contains fluorine-containing contaminants corresponding to less than 10 ppm fluorides.
20. The process according to any one of the preceding items, wherein the column vapor discharge stream contains fluorine-containing contaminants corresponding to less than 5 ppm fluorides.
21. The process according to any one of the preceding items, wherein the column vapor discharge stream contains fluorine-containing contaminants corresponding to about 1 ppm fluorides.
22. The process according to any one of items 1-21, wherein the column vapor discharge stream contains less than 25 ppm fluorides.
23. The process according to any one of items 1-21, wherein the column vapor discharge stream contains less than 10 ppm fluorides.
24. The process according to any one of items 1-21, wherein the column vapor discharge stream contains less than 5 ppm fluorides.
25. The process according to any one of items 1-21, wherein the column vapor discharge stream contains about 1 ppm fluorides.
26. The process according to any one of the preceding items, wherein the cations are from one or more metals pertaining to any one of Groups 1, 2, 4, 8, 13 and at the same time to any one of Periods 2, 3, 4, 5 of the Periodic Table of Elements.
27. The process according to any one of the preceding items, wherein the cations are from one or more metals having a molecular weight of less than 100 g/mol.
28. The process according to any one of the preceding items, wherein the cations are from one or more metals selected from the group consisting of aluminum, zirconium, iron, magnesium, calcium, lithium, sodium, potassium and any combination thereof.
29. The process according to any one of the preceding items, wherein the cations are from one or more metals selected from the group consisting of aluminum, zirconium and iron.
30. The process according to any one of the preceding items, wherein the cations are aluminum cations.
31. The process according to any one of the preceding items, wherein the mass ratio between metal and fluorine (Me/F) is from about 0.5 to about 500.
32. The process according to any one of the preceding items, wherein the mass ratio between metal and fluorine (Me/F) is from about 1 to about 200.
33. The process according to any one of the preceding items, wherein the mass ratio between metal and fluorine (Me/F) is from about 5 to about 50.
34. The process according to item 31, wherein the metal is aluminum and the mass ratio between aluminum and fluorine (Al/F) is from about 0.5 to 500.
35. The process according to item 32 or 33, wherein the metal is aluminum and the mass ratio between aluminum and fluorine (Al/F) is from 1 to 200, or from 5 to 50.
36. The process according to any one of the preceding items, wherein the column liquid feed stream includes nitric acid including cations of one or more metals or consists of nitric acid including cations of one or more metals.
37. The process according to any one of the preceding items, wherein the column liquid feed stream is supplied as such to the distillation column.
38. The process according to any one of items 1 to 36, wherein the column liquid feed stream is prepared *in situ* by feeding at least one metal compound in solid or at least partially dissolved form into the distillation column containing liquid nitric acid.
39. The process according to item 38, wherein said liquid nitric acid in the distillation column contains at least a recycled fraction of the condensed column vapor discharge stream.
40. The process according to any one of the preceding items, further including:
   mixing at least one metal compound in solid form with a liquid, particularly nitric acid.
41. The process according to item 40, wherein the at least one metal compound in solid form is at least partially dissolved, thereby generating the column liquid feed stream.
42. The process according to items 40 or 41, wherein the at least one metal compound is provided as salt or salts, e.g. a nitrate.
43. The process according to item 42, wherein the at least one metal compound is provided as solid metal salt or metal salts.
44. The process according to item 42, wherein the at least one metal compound is provided as an aqueous solution of one or more metal salts.
45. The process according to item 42, wherein the at least one metal compound is provided as an aqueous nitrate solution.
46. The process according to any one of the preceding items, wherein the distillation column has one or multiple separation stages.
47. The process according to any one of the preceding items, wherein the distillation column has 1 to 20 theoretical separation stages.
48. The process according to any one of the preceding items, wherein the distillation column has more than 1 and up to 15 theoretical separation stages.
49. The process according to any one of the preceding items, wherein the distillation column has 1 to 20 actual separation stages.
50. The process according to any one of the preceding items, wherein the distillation column has 1 to 15 actual separation stages.
51. The process according to any one of the preceding items, which is a continuous process.
52. The process according to any one of the preceding items, wherein the process is operated at a temperature of from about 15°C to about 250°C, particularly from about 50 °C to about 150 °C, more particularly from about 75 °C to about 125 °C.
53. The process according to anyone of the preceding items, wherein the process is operated at a pressure of from about 2 kPa to about 5 MPa, particularly from about 5 kPa to about 1 MPa, more particularly from about 20 kPa to about 200 kPa.
54. The process according to anyone of the preceding items, wherein the process is integrated into another nitric acid evaporation or distillation process.
55. The process according to any one of the preceding items, further including:
   determining a residual concentration of fluorine-containing contaminants in the condensed nitric acid.
56. The process according to item 55, wherein the residual concentration of fluorine-containing contaminants in the condensed nitric acid is determined by potentiometry using an ion-selective electrode, ion-chromatography or mass spectrometry.
57. The process according to any one of items 4 to 56, further including: evaporating a reboiler vapor discharge stream in a reboiler from the column liquid discharge stream discharged from the distillation column.
58. The process according to any one of items 4 to 57, further including: recycling at least a fraction of the column liquid discharge stream into the distillation column.
59. The process according to any one of item 57 or 58, further including: recycling at least a fraction of the reboiler vapor discharge stream into the distillation column.
60. The process according to any one of items 57 to 59, further including: reducing a concentration of fluorine-containing contaminants, e.g. fluorides, in the column liquid discharge stream or the reboiler vapor discharge stream.
61. The process according to any one of items 57 to 60, further including: enriching the concentration of the cations of the one or more metals in the column liquid discharge stream or the reboiler vapor discharge stream.
62. The process according to any one of the preceding items, consisting of:
   contacting a column vapor feed stream in gas phase, including from about 20 wt% to about 100 wt% HNOs and fluorine-containing contaminants, in particular up to 1 wt% fluorides, with a column liquid feed stream, including cations of aluminum, zirconium, iron, magnesium, calcium, lithium, sodium, potassium or any combination thereof, particularly aluminum, zirconium, iron or any combination thereof, more particularly aluminum in a distillation column, thereby depleting the fluorine-containing contaminants from the gas phase;
   recovering the nitric acid depleted in fluorine-containing contaminants as a column vapor discharge stream;
   condensing the column vapor discharge stream;
   collecting the condensed nitric acid stream;
   discharging a metal cation-containing liquid nitric acid stream enriched in fluorine-containing contaminants from the column as a column liquid discharge stream;
   recycling a fraction of the column vapor discharge stream into the column;
   evaporating a reboiler vapor discharge stream from the column liquid discharge stream discharged from the distillation column;
      and
   recycling at least a fraction of the column liquid discharge stream and/or at least a fraction of the reboiler vapor discharge stream into the distillation column.
63. An apparatus for purification of nitric acid from fluorine-containing contaminants, including:
   (a) a distillation column having at least two inlets and at least two outlets;
   (b) a first supply configured to supply a column vapor feed stream, including fluorine-containing contaminants, to the distillation column;
   (c) a second supply configured to supply cations of one or more metals to the distillation column;
   (d) a first discharge line configured to recover a column vapor discharge stream from the top of the distillation column; and
   (e) a second discharge configured to discharge a column liquid discharge stream from the bottom of the distillation column.
64. The apparatus according to item 63, further including: (f) a condenser configured to condense the column vapor discharge stream.
65. The apparatus according to item 63 or 64, further including: (g) a third discharge configured to discharge the condensed nitric acid from the condenser.
66. The apparatus according to any one of items 63 to 65, further including:
   a container configured to collect the condensed nitric acid.
67. The apparatus according to any one of items 63 to 66, further including a second line configured to recycle at least a fraction of the condensed nitric acid to the distillation column.
68. The apparatus according to any one of items 63 to 67, further including a second line configured to recycle at least a fraction of the condensed nitric acid to the second supply.
69. The apparatus according to any one of items 63 to 68, further including a third line configured to recycle liquid discharged from the distillation column back to the distillation column.
70. The apparatus according to any one of items 63 to 69, further including a reboiler configured to evaporate nitric acid.
71. The apparatus according to any one of items 63 to 70, further including a reboiler configured to evaporate a reboiler vapor discharge stream from the column liquid discharge stream.
72. The apparatus according to any one of items 63 to 71, further including a fourth discharge configured to discharge a reboiler liquid discharge stream from the reboiler.
73. The apparatus according to item any one of items 63 to 72, further including a fourth line configured to supply the reboiler vapor discharge stream from the reboiler to the distillation column.
74. The apparatus according to item any one of items 63 to 73, further including a fifth line configured to supply the reboiler liquid discharge stream from the reboiler to the distillation column.
75. The apparatus according to item 74, wherein said fifth line configured to supply the reboiler liquid discharge stream from the reboiler to the distillation column further includes a junction to a liquid discharge configured to separate at least a fraction of fluorine-enriched liquid nitric acid.
76. The apparatus according to item 74 or 75, wherein said fifth line configured to supply the reboiler liquid discharge stream from the reboiler to the distillation column further includes a junction to a sixth line configured to supplement a recycle supplementation stream to the reboiler liquid discharge stream before it enters the distillation column.
77. The apparatus according to any one of items 63 to 76, consisting of
   (a) a distillation column having at least two inlets and at least two outlets;
   (b) a first supply configured to supply a column vapor feed stream, including fluorine-containing contaminants to the distillation column;
   (c) a second supply configured to supply cations of one or more metals to the distillation column;
   (d) a first discharge line for recovering a column vapor discharge stream from the top of the distillation column; and
   (e) a second discharge configured to discharge a column liquid discharge stream from the bottom of the distillation column.
78. The apparatus according to any one of items 63 to 76, consisting of
   (a) a distillation column having at least two inlets and at least two outlets;
   (b) a first supply configured to supply a column vapor feed stream, including fluorine-containing contaminants to the distillation column;
   (c) a second supply configured to supply cations of one or more metals to the distillation column;
   (d) a first discharge line for recovering a column vapor discharge stream from the top of the distillation column;
   (e) a second discharge configured to discharge a column liquid discharge stream from the bottom of the distillation column;
   (f) a second line configured to recycle at least a fraction of the condensed nitric acid to the distillation column or to the second supply;
   (g) a third line configured to recycle at least a fraction of the column liquid discharge stream discharged from the distillation column back into the distillation column;
   (h) a reboiler configured to evaporate nitric acid, particularly to evaporate a reboiler vapor discharge stream from the column liquid discharge stream; a fourth discharge configured to discharge a reboiler liquid discharge stream from the reboiler; and a fourth line configured to supply the reboiler vapor discharge stream from the reboiler to the distillation column.
79. The apparatus according to any one of items 63 to 76, consisting of
   (a) a distillation column having at least two inlets and at least two outlets;
   (b) a first supply configured to supply a column vapor feed stream, including fluorine-containing contaminants to the distillation column;
   (c) a second supply configured to supply cations of one or more metals to the distillation column;
   (d) a first discharge line for recovering a column vapor discharge stream from the top of the distillation column;
   (e) a second discharge configured to discharge a column liquid discharge stream from the bottom of the distillation column;
   (f) a second line configured to recycle at least a fraction of the condensed nitric acid to the distillation column or to the second supply;
   (g) a reboiler configured to evaporate nitric acid, particularly to evaporate a reboiler vapor discharge stream from the column liquid discharge stream; and optionally a fourth discharge configured to discharge a reboiler liquid discharge stream from the reboiler; and
   (h) a fourth line configured to supply the reboiler vapor discharge stream and/or a fifth line configured to supply the reboiler liquid discharge stream from the reboiler to the distillation column, wherein said fifth line optionally further comprises a junction to a liquid discharge configured to separate at least a fraction of fluorine-enriched liquid nitric acid; and/or a junction to a sixth line configured to supplement a recycle supplementation stream to the reboiler liquid discharge stream before it enters the distillation column.
80. The apparatus according to any one of items 76 to 79, wherein said recycle supplementation stream includes liquid nitric acid.
81. The apparatus according to any one of items 76 to 80, wherein said recycle supplementation stream includes at least one metal compound, such as a metal in elemental form or a metal salt, or any combination thereof.
82. The apparatus according to any one of items 63 to 81, wherein all materials of construction used are resistant against nitric acid and hydrofluoric acid.
83. The apparatus according to any one of items 63 to 82, wherein the distillation column is made of fluoropolymers with fiber reinforcement or fluoropolymer-lined steel.
84. The apparatus according to any one of items 63 to 83, wherein the internal parts of distillation column are made of fluoropolymers, carbide ceramics, alumina ceramics, or any combination thereof.
85. The apparatus according to any one of items 63 to 84, wherein the condenser is made of stainless steel, high-silicon stainless steel, carbide ceramics, fluoropolymers, titanium, tantalum or niobium.
86. The apparatus according to any one of items 63 to 85, wherein the distillation column has one or multiple separation stages.
87. The apparatus according to any one of items 63 to 86, wherein the distillation column has 1 to 20 separation stages.
88. The apparatus according to any one of items 63 to 87, wherein the distillation column has more than 1 and up to 15 theoretical separation stages or more than 1 and up to 15 actual separation stages.
89. The apparatus according to any one of items 63 to 88, wherein the distillation column is a column with random packing, structured packing or trays, such as bubble cap trays.
90. The apparatus according to any one of items 63 to 88, further including at least one mixer configured to mix metal compound(s) in solid form with a liquid.
91. A method of depleting fluorine-containing contaminants from a column vapor feed stream in the gas phase including: contacting the first nitric acid stream with a column liquid feed stream, wherein the column liquid feed stream includes a liquid stream including cations of one or more metals.
92. Use of a liquid containing cations of one or more metals for depleting fluorine-containing contaminants from nitric acid in gas phase.
93. The use according to item 92, wherein the liquid is liquid nitric acid.
94. The apparatus according to any one of items 63 to 90, the method according to item 91 or the use according to item 92 or item 93, wherein the cations are from one or more metals pertaining to any one of Groups 1, 2, 4, 8, 13 and at the same time to any one of Periods 2, 3, 4, 5 of the Periodic Table of Elements.
95. The apparatus according to any one of items 63 to 90, the method according to item 91 or the use according to item 92 or 93, wherein the cations are from one or more metals having a molecular weight of less than 100 g/mol.
96. The apparatus according to any one of items 63 to 90, the method according to item 91 or the use according to item 92 or 93, wherein the cations are from one or metals are selected from the group consisting of aluminum, zirconium, iron, magnesium, calcium, lithium, sodium, potassium and any combination thereof, particularly selected from the group consisting of aluminum, zirconium and iron.
97. The apparatus according to any one of items 63 to 90, the method according to item 91 or the use according to item 92 or 93, wherein the cations are aluminum cations.
98. The method or use use according to any one of items 91 to 97, wherein said method or use is effected in a distillation column.
99. The method or use use according to any one of items 91 to 98, wherein said method or use is effected in a distillation column, which has one or multiple separation stages, particularly 1 to 20, more particularly more than 1 and up to 15 theoretical separation stages.

### EXAMPLES

In the following non-limiting examples, the present invention is described in more detail. Reference signs mentioned have the same meaning as recited for Figures 2a and 2b (cf. Figure legends).

### Example 1:

Nitric acid vapors (65 wt% HNOs plus 25 ppm fluoride contamination) are fed via line **(1)** to a tray column **(2)** made out of suitable materials (e.g. PTFE/PFA lined). On each tray, the nitric acid vapors pass through liquid nitric acid containing dissolved aluminum. The nitric acid / aluminum mixture is added to the column top and flows in counterflow to the vapors towards the bottom of the column. The purified acid vapors **(4)** will be condensed and mainly discharged as stream **(6)** from the purification unit. A fraction **7)** of the condensate is mixed with aluminum salt **(3)** and added to the top of the column. A fluoride-rich waste nitric acid will leave the plant at the bottom of the column as stream **(8)** and discharged as stream **(10)** for disposal. Based on a distribution factor of 0.1 four theoretical stages will be needed in the column to achieve a product acid with 0.05 ppm fluorides and a waste acid with 500 ppm fluorides. The waste acid that has to be discharged and disposed contains only 55 wt% HNOs. Based on this process design approx. 95% of the nitric acid could be recovered.

**Table 1: Mass balance of Example 1**

| | **Mixed Acid** | | **Metal Salt** | | **Purified Acid** | | **Waste Acid** | |
|---|---|---|---|---|---|---|---|---|
| | wt% | kg/h | wt% | kg/h | wt% | kg/h | wt% | kg/h |
| **HNO₃** | 65.0% | 227.500 | | | 65.0% | 218.019 | 54.4% | 9.510 |
| **H₂O** | 35.0% | 122.491 | 43.2% | 1.245 | 35.0% | 117.395 | 36.3% | 6.341 |
| **HF** | 26 ppm | 0.009 | | | 0.05 ppm | 0.000 | | |
| **Al(NO₃)₃** | | | 56.8% | 1.635 | | | 9.2% | 1.602 |
| **AlF₃** | | | | | | | 737 ppm | 0.013 |
| **Total** | 100.0% | 350.000 | 100.0% | 2.880 | 100.0% | 335.413 | 100.0% | 17.466 |

### Example 2:

Nitric acid (65 wt% HNOs plus 25 ppm fluoride contamination) is fed as liquid via line **(1)** to a distillation column **(2)** with several trays at the top, and a structured packing in the lower part. Again, the liquid nitric acid is evaporated and the vapor flow in counter-flow to a liquid nitric acid / aluminum mixture to the column top. Because of the liquid acid feed, the system is equipped with a reboiler to evaporate the nitric acid feed. The discharge from the reboiler **(10)** is partially recycled as stream **(13)** by using a pump and circulated through the structured packing. The fraction that is recycled is > 50%. As in example 1, the purified nitric acid **(6)** has a residual fluoride concentration of 0.05 ppm, while the distillation residue **(12)** contains 5000 ppm fluorides. There-fore, stream **(12)** is subjected to a precipitation treatment which removes fluorides and enriched in calcium before it is recycled as stream **(14).** Based on this process design approx. 99.5% of the nitric acid could be recovered.

**Table 2: Mass balance of Example 2.**

| | **Mixed Acid** | | **Metal Salt** | | **Purified Acid** | | **Waste Acid** | |
|---|---|---|---|---|---|---|---|---|
| | wt% | kg/h | wt% | kg/h | wt% | kg/h | wt% | kg/h |
| **HNO₃** | 65.0% | 227.500 | | | 65.0% | 226.551 | 56.0% | 0.978 |
| **H₂O** | 35.0% | 122.491 | 43.2% | 0.124 | 35.0% | 121.989 | 35.8% | 0.662 |
| **HF** | 26 ppm | 0.009 | | | 0.05 ppm | 0.000 | | |
| **Al(NO₃)₃** | | | 56.8% | 0.162 | | | 7.4% | 0.130 |
| **AlF₃** | | | | | | | 7367 ppm | 0.013 |
| **Total** | 100.0% | 350.000 | 100.0% | 0.286 | 100.0% | 348.539 | 100.0% | 1.746 |

## Claims

1. A process for purification of nitric acid from fluorine-containing contaminants, including:
contacting in a distillation column:
a column vapor feed stream in gas phase, including fluorine-containing contaminants, with
a column liquid feed stream in liquid phase, including cations of one or more metals, thereby depleting the fluorine-containing contaminants from the column vapor feed stream; and
recovering nitric acid depleted in fluorine-containing contaminants as a column vapor discharge stream.

2. The process according to claim 1, further including:
condensing the column vapor discharge stream; and/or
collecting a condensed nitric acid stream; and/or
discharging metal cation-containing liquid nitric acid enriched in fluorine-containing contaminants from the distillation column as a column liquid discharge stream; and/or
recycling at least a fraction of the column vapor discharge stream, particularly after condensation, into the distillation column; and/or
evaporating nitric acid in liquid phase including fluorine-containing contaminants, thereby generating said column vapor feed stream.

3. The process according to claim 1 or 2, wherein the column vapor feed stream has a concentration of from about 20 wt% to about 100 wt% HNOs, from about 45 wt% to about 99 wt% HNOs, from about 55 wt% to about 75 wt% HNOs, or about 65 wt% HNOs, each based on the total weight of the column vapor feed stream.

4. The process according to any one of the preceding claims, wherein the column vapor feed stream contains fluorine-containing contaminants corresponding to up to 1 wt% fluorides, from about 20 ppm to about 800 ppm fluorides, or from about 50 ppm to about 500 ppm fluorides.

5. The process according to any one of the preceding claims, wherein the column vapor discharge stream contains fluorine-containing contaminants corresponding to less than 25 ppm fluorides, less than 10 ppm fluorides, less than 5 ppm fluorides or less than 1 ppm fluorides.

6. The process according to any one of the preceding claims, wherein the cations are from one or more metals pertaining to any one of Groups 1, 2, 4, 8, 13 and at the same time to any one of Periods 2, 3, 4, 5 of the Periodic Table of Elements, particularly from one or more metals selected from the group consisting of aluminum, zirconium, iron, magnesium, calcium, lithium, sodium, potassium and any combination thereof.

7. The process according to any one of the preceding claims, wherein the column liquid feed stream is supplied as such to the distillation column, or wherein the column liquid feed stream is prepared *in situ* by feeding at least one metal compound in solid or at least partially dissolved form into the distillation column containing liquid nitric acid.

8. The process according to any one of the preceding claims, wherein the distillation column has 1 to 20 theoretical separation stages, particularly more than 1 and up to 15 theoretical separation stages.

9. An apparatus for purification of nitric acid from fluorine-containing contaminants, including:
(a) a distillation column having at least two inlets and at least two outlets;
(b) a first supply configured to supply a column vapor feed stream, including fluorine-containing contaminants, to the distillation column;
(c) a second supply configured to supply cations of one or more metals to the distillation column;
(d) a first discharge line configured to recover a column vapor discharge stream from the top of the distillation column; and
(e) a second discharge configured to discharge a column liquid discharge stream from the bottom of the distillation column.

10. The apparatus according to claim 9, further including:
a condenser configured to condense the column vapor discharge stream; and/or a third discharge configured to discharge the condensed nitric acid from the condenser; and/or
a container configured to collect the condensed nitric acid; and/or a second line configured to recycle at least a fraction of the condensed nitric acid to the distillation column; and/or
a second line configured to recycle at least a fraction of the condensed nitric acid to the second supply; and/or
a third line configured to recycle liquid discharged from the distillation column back to the distillation column; and/or
a reboiler configured to evaporate nitric acid; and/or
a reboiler configured to evaporate a reboiler vapor discharge stream from the column liquid discharge stream; and/or
a fourth discharge configured to discharge a reboiler liquid discharge stream from the reboiler; and/or
a fourth line configured to supply the reboiler vapor discharge stream from the reboiler to the distillation column; and/or
a fifth line configured to supply the reboiler liquid discharge stream from the reboiler to the distillation column.

11. A method of depleting fluorine-containing contaminants from a column vapor feed stream in the gas phase including: contacting the first nitric acid stream with a column liquid feed stream, wherein the column liquid feed stream includes a liquid stream including cations of one or more metals.

12. Use of a liquid containing cations of one or more metals for depleting fluorine-containing contaminants from nitric acid in gas phase.

13. The apparatus, method or use according to any one of claims 9 to 12, wherein the cations are from one or more metals pertaining to any one of Groups 1, 2, 4, 8, 13 and at the same time to any one of Periods 2, 3, 4, 5 of the Periodic Table of Elements, particularly from one or more metals selected from the group consisting of aluminum, zirconium, iron, magnesium, calcium, lithium, sodium, potassium and any combination thereof.
